# EUROPEAN PATENT SPECIFICATION

(11) **EP 1 236 393 B1**
(45) Date of publication and mention of the grant of the patent: **29.12.2004**
(21) Application number: 02075755.5
(22) Date of filing: 26.02.2002
(51) Int. Cl.: A01K 5/02

(54) **A feed metering device and a method of supplying fodder and/or drink in metered portions to an animal**
Futterdosiervorrichtung und Verfahren um Futter oder Getränke in gemessenen Portionen einem Tier zuzuführen
Dispositif de dosage d'alimentation et procédé de livraison d'alimentation ou de boisson à un animal par portions mesurées

(30) Priority: 02.03.2001 NL 1017477
(43) Date of publication of application: 04.09.2002
(60) Divisional application: 04077138.8
(73) Proprietor: Lely Enterprises AG, 6300 ZUG (CH)
(72) Inventor: Sie, Howard, 3037 VC Rotterdam (NL); Voogd, Lucien Eliza Niels, 4143 HG Leerdam (NL); van den Berg, Karel, 2971 BR Bleskensgraaf (NL)
(74) Representative: Corten, Maurice Jean F.M.

(56) References cited:
- EP-A- 0 610 171
- WO-A-95/23503
- GB-A- 2 190 574
- US-A- 4 735 171

## Description

The present invention relates to a feed metering device for supplying fodder and/or drink to an animal according to the preamble of claim 1.

Such a feed metering device is known from EP-A 0 610 171. A disadvantage of said feed metering device is that an animal has quickly found out where the fodder and/or drink can be obtained, and regularly goes to the feed metering device and puts its head into the feeding trough, even when it has already received its portion of fodder and/or drink. This results in a disturbance of the feeding of other animals. For the purpose of forbidding animals that are not eligible to be fed access to the feeding trough, the entrance opening to the feeding trough is closed by a closing means.

It is an object of the invention to provide an improved feed metering device.

According to the invention, for that purpose a feed metering device of the above-described type comprises the measures of the characterizing part of claim 1. It has appeared that animals having made use of the feeding trough, even after there is no more fodder and/or drink present therein, still keep their heads in the feeding trough during a short to a longer period of time waiting for additional fodder and/or drink that may still be supplied. As a result thereof another animal that is ready to be fed cannot gain access to the feeding trough immediately. According to the invention this is prevented by operating the closing means, after an animal has consumed at least a part of the quantity of fodder and/or drink, so that further access to the feeding trough is impossible for that animal. An animal that has just made use of the feeding trough is thus urged to clear the entrance to the feeding trough.

The detection device preferably comprises a weighing device for weighing the quantity of fodder and/or drink in the feeding trough. Said weighing device is capable of measuring whether or not there is still fodder and/or drink present in the feeding trough after the supply of a quantity of fodder and/or drink into the feeding trough. Thus the weighing device, e.g. after having detected that there is no more fodder and/or drink present in the feeding trough, can issue a signal for operating the closing means for closing the feeding trough.

When the detection device comprises a clock, it is possible to measure how long the quantity of fodder and/or drink in the feeding trough remains untouched. By setting for example an upper limit, after said upper limit has elapsed, i.e. after a certain threshold time has elapsed, the clock can issue a signal for having the closing means closed. In particular when data from the weighing device and the clock are combined, an extremely efficient use of the feed metering device is possible.

In an embodiment of the invention the feed metering device is provided with a clock for determining the duration from a supply of a quantity of fodder and/or drink and for issuing, in dependence of the result of the determination of the duration, a second signal for operating the closing means, the feed metering device being provided with a closing means operating device for operating the closing means on the basis of the first and/or the second signal.

In an embodiment of a feed metering device according to the invention the feed metering device is provided with a means for determining the decrease per unit of time of the quantity of fodder and/or drink in the feeding trough. Such a means may be used for issuing a signal for operating the closing means, but may also be used (in combination with an animal identification) for determining whether the eating rate of a particular animal corresponds with its usual eating rate. Said eating rate may be an indication of the health of an animal.

It is particularly advantageous when the feed metering device is provided with a comparator for comparing the determined decrease per unit of time with a decrease threshold. When the determined decrease per unit of time is equal to or smaller than the decrease threshold, the comparator can issue a signal causing the closing means to close the entrance opening. For reasons of accuracy the feed metering device is preferably provided with a file for containing per animal a decrease threshold.

An embodiment of a feed metering device according to the invention is provided with a device for detecting jamming for the closing means. This prevents an animal from being injured during closing of the entrance opening to the feeding trough.

There is preferably provided an obstacle detector for detecting an obstacle in the entrance opening. Such an obstacle detector is preferably adapted to distinguish animals and other objects from each other.

It has appeared that animals, after having taken the quantity of fodder and/or drink, knock or kick with force against the feed metering device for trying to obtain additional fodder and/or drink. According to the invention this undesirable behaviour is prevented by providing an anti-violence detector. When said anti-violence detector, which may comprise e.g. a vibration detector, detects that there is knocked or the like against the feed metering device, said detector issues a signal for operating the closing means for closing the feeding trough.

Preferably a detector is suitable for issuing, after detection of a particular situation, a signal for controlling the functioning of the closing means.

Preferably the feed metering device is further provided with an animal identification device for identifying a particular animal that visits the feeding trough. Such an animal identification device may be used extremely advantageously for supplying a quantity of fodder and/or drink by the feed supplying device to the feeding trough with the aid of data from the animal identification device. With the aid of data from the animal identification device the operation of the closing means is controlled in an advantageous manner, so that it is possible to forbid a particular animal access to the feeding trough. Just because the animal identification device is adapted to identify a particular animal, said device is especially suitable for holding back an animal wishing to make use of the feeding trough at an undesired point of time. Moreover, the animal identification device is adapted to co-operate with the obstacle detector for obtaining an extremely efficient functioning of the closing means.

The closing means may be formed by a separate component, but is preferably constituted by the feeding trough itself which is designed as a movable one. As a result thereof the number of components is limited and the feed metering device can be manufactured cheaply.

A feed metering device according to the invention is in particular characterized in that the feed metering device is provided with a device for issuing a warning signal indicating that the closing means is going to close. In this manner an animal knows when the closing means is going to close, and thus it is possible to teach the animal to leave the feeding trough when the warning signal (e.g. a sound or light signal) is issued.

An embodiment of a feed metering device according to the invention is provided with a device for detecting jamming for the closing means. This prevents an animal from being injured during closing of the entrance opening to the feeding trough.

There is preferably provided an obstacle detector for detecting an obstacle in the entrance opening. Such an obstacle detector is preferably adapted to distinguish animals and other objects from each other.

It has appeared that animals, after having taken the quantity of fodder and/or drink, knock or kick with force against the feed metering device for trying to obtain additional fodder and/or drink. According to the invention this undesirable behaviour is prevented by providing an anti-violence detector. When said anti-violence detector, which may comprise e.g. a vibration detector, detects that there is knocked or the like against the feed metering device, said detector issues a signal for operating the closing means for closing the feeding trough.

Preferably a detector is suitable for issuing, after detection of a particular situation, a signal for controlling the functioning of the closing means.

Preferably the feed metering device is further provided with an animal identification device for identifying a particular animal that visits the feeding trough. Such an animal identification device may be used extremely advantageously for supplying a quantity of fodder and/or drink by the feed supplying device to the feeding trough with the aid of data from the animal identification device. With the aid of data from the animal identification device the operation of the closing means is controlled in an advantageous manner, so that it is possible to forbid a particular animal access to the feeding trough. Just because the animal identification device is adapted to identify a particular animal, said device is especially suitable for holding back an animal wishing to make use of the feeding trough at an undesired point of time. Moreover, the animal identification device is adapted to co-operate with the obstacle detector for obtaining an extremely efficient functioning of the closing means.

The closing means may be formed by a separate component, but is preferably constituted by the feeding trough itself which is designed as a movable one. As a result thereof the number of components is limited and the feed metering device can be manufactured cheaply.

It has appeared that animals having made use of the feeding trough, even after there is no more fodder and/or drink present therein, still keep their heads in the feeding trough during a short to a longer period of time waiting for additional fodder and/or drink that may still be supplied. As a result thereof another animal that is ready to be fed cannot gain access to the feeding trough immediately. According to the invention this is prevented by providing the feed metering device with a detection device for determining the quantity of fodder and/or drink in the feeding trough at a point of time after a supply of a quantity of fodder and/or drink and for issuing, in dependence of the result of the quantity determination, a signal for operating the closing means. This makes it possible to operate the closing means, after an animal has consumed at least a part of the quantity of fodder and/or drink, so that further access to the feeding trough is impossible for that animal. An animal that has just made use of the feeding trough is thus urged to clear the entrance to the feeding trough.

The detection device preferably comprises a weighing device for weighing the quantity of fodder and/or drink in the feeding trough. Said weighing device is capable of measuring whether or not there is still fodder and/or drink present in the feeding trough after the supply of a quantity of fodder and/or drink into the feeding trough. Thus the weighing device, e.g. after having detected that there is no more fodder and/or drink present in the feeding trough, can issue a signal for operating the closing means for closing the feeding trough.

In particular when data from the weighing device and the clock are combined, an extremely efficient use of the feed metering device is possible.

A feed metering device according to the invention is in particular characterized in that the feed metering device is provided with a device for issuing a warning signal indicating that the closing means is going to close. In this manner an animal knows when the closing means is going to close, and thus it is possible to teach the animal to leave the feeding trough when the warning signal (e.g. a sound or light signal) is issued.

In an embodiment of a feed metering device according to the invention the feed metering device is provided with a means for determining the decrease per unit of time of the quantity of fodder and/or drink in the feeding trough. Such a means may be used for issuing a signal for operating the closing means, but may also be used (in combination with an animal identification) for determining whether the eating rate of a particular animal corresponds with its usual eating rate. Said eating rate may be an indication of the health of an animal.

It is particularly advantageous when the feed metering device is provided with comparator for comparing the determined decrease per unit of time with a decrease threshold. When the determined decrease per unit of time is equal to or smaller than the decrease threshold, the comparator can issue a signal causing the closing means to close the entrance opening. For reasons of accuracy the feed metering device is preferably provided with a file for containing per animal a decrease threshold.

Preferably a detector is suitable for issuing, after detection of a particular situation, a signal for controlling the functioning of the closing means.

Preferably the feed metering device is further provided with an animal identification device for identifying a particular animal that visits the feeding trough. Such an animal identification device may be used extremely advantageously for supplying a quantity of fodder and/or drink by the feed supplying device to the feeding trough with the aid of data from the animal identification device. With the aid of data from the animal identification device the operation of the closing means is controlled in an advantageous manner, so that it is possible to forbid a particular animal access to the feeding trough. Just because the animal identification device is adapted to identify a particular animal, said device is especially suitable for holding back an animal wishing to make use of the feeding trough at an undesired point of time.

A feed metering device according to the invention is particularly characterized in that the feed metering device is provided with a device for issuing a warning signal indicating that the closing means is going to close. In this manner an animal knows when the closing means is going to close, and thus it is possible to teach the animal to leave the feeding trough when the warning signal (e.g. a sound or light signal) is issued.

It has appeared that animals having made use of the feeding trough, even after there is no more fodder and/or drink present therein, still keep their heads in the feeding trough during a short to a longer period of time waiting for additional fodder and/or drink that may still be supplied. As a result thereof another animal that is ready to be fed cannot gain access to the feeding trough immediately. According to the invention this is prevented in that the feed metering device is provided with a detection device for determining the quantity of fodder and/or drink in the feeding trough at a point of time after a supply of a quantity of fodder and/or drink and for issuing, in dependence of the result of the quantity determination, a signal for operating the closing means. This makes it possible to operate the closing means, after an animal has consumed at least a part of the quantity of fodder and/or drink, so that further access to the feeding trough is impossible for that animal. An animal that has just made use of the feeding trough is thus urged to clear the entrance to the feeding trough.

The detection device preferably comprises a weighing device for weighing the quantity of fodder and/or drink in the feeding trough. Said weighing device is capable of measuring whether or not there is still fodder and/or drink present in the feeding trough after the supply of a quantity of fodder and/or drink into the feeding trough. Thus the weighing device, e.g. after having detected that there is no more fodder and/or drink present in the feeding trough, can issue a signal for operating the closing means for closing the feeding trough.

When the detection device comprises a clock, it is possible to measure how long the quantity of fodder and/or drink in the feeding trough remains untouched. By setting for example an upper limit, after said upper limit has elapsed, i.e. after a certain threshold time has elapsed, the clock can issue a signal for having the closing means closed. In particular when data from the weighing device and the clock are combined, an extremely efficient use of the feed metering device is possible.

In an embodiment of a feed metering device according to the invention the feed metering device is provided with a means for determining the decrease per unit of time of the quantity of fodder and/or drink in the feeding trough. Such a means may be used for issuing a signal for operating the closing means, but may also be used (in combination with an animal identification) for determining whether the eating rate of a particular animal corresponds with its usual eating rate. Said eating rate may be an indication of the health of an animal.

It is particularly advantageous when the feed metering device is provided with a comparator for comparing the determined decrease per unit of time with a decrease threshold. When the determined decrease per unit of time is equal to or smaller than the decrease threshold, the comparator can issue a signal causing the closing means to close the entrance opening. For reasons of accuracy the feed metering device is preferably provided with a file for containing per animal a decrease threshold.

An embodiment of a feed metering device according to the invention is provided with a device for detecting jamming for the closing means. This prevents an animal from being injured during closing of the entrance opening to the feeding trough.

There is preferably provided an obstacle detector for detecting an obstacle in the entrance opening. Such an obstacle detector is preferably adapted to distinguish animals and other objects from each other. Moreover, the animal identification device is adapted to co-operate with the obstacle detector for obtaining an extremely efficient functioning of the closing means.

The closing means may be formed by a separate component, but is preferably constituted by the feeding trough itself which is designed as a movable one. As a result thereof the number of components is limited and the feed metering device can be manufactured cheaply.

Preferably a detector is suitable for issuing, after detection of a particular situation, a signal for controlling the functioning of the closing means.

Preferably the feed metering device is further provided with an animal identification device for identifying a particular animal that visits the feeding trough. Such an animal identification device may be used extremely advantageously for supplying a quantity of fodder and/or drink by the feed supplying device to the feeding trough with the aid of data from the animal identification device. With the aid of data from the animal identification device the operation of the closing means is controlled in an advantageous manner, so that it is possible to forbid a particular animal access to the feeding trough. Just because the animal identification device is adapted to identify a particular animal, said device is especially suitable for holding back an animal wishing to make use of the feeding trough at an undesired point of time.

A feed metering device according to the invention is particularly characterized in that the feed metering device is provided with a device for issuing a warning signal indicating that the closing means is going to close. In this manner an animal knows when the closing means is going to close, and thus it is possible to teach the animal to leave the feeding trough when the warning signal (e.g. a sound or light signal) is issued.

It has appeared that animals having made use of the feeding trough, even after there is no more fodder and/or drink present therein, still keep their heads in the feeding trough during a short to a longer period of time waiting for additional fodder and/or drink that may still be supplied. As a result thereof another animal that is ready to be fed cannot gain access to the feeding trough immediately. According to the invention this is prevented in that the feed metering device is provided with a detection device for determining the quantity of fodder and/or drink in the feeding trough at a point of time after a supply of a quantity of fodder and/or drink and for issuing, in dependence of the result of the quantity determination, a signal for operating the closing means. This makes it possible to operate the closing means, after an animal has consumed at least a part of the quantity of fodder and/or drink, so that further access to the feeding trough is impossible for that animal. An animal that has just made use of the feeding trough is thus urged to clear the entrance to the feeding trough.

The detection device preferably comprises a weighing device for weighing the quantity of fodder and/or drink in the feeding trough. Said weighing device is capable of measuring whether or not there is still fodder and/or drink present in the feeding trough after the supply of a quantity of fodder and/or drink into the feeding trough. Thus the weighing device, e.g. after having detected that there is no more fodder and/or drink present in the feeding trough, can issue a signal for operating the closing means for closing the feeding trough.

When the detection device comprises a clock, it is possible to measure how long the quantity of fodder and/or drink in the feeding trough remains untouched. By setting for example an upper limit, after said upper limit has elapsed, i.e. after a certain threshold time has elapsed, the clock can issue a signal for having the closing means closed. In particular when data from the weighing device and the clock are combined, an extremely efficient use of the feed metering device is possible.

In an embodiment of a feed metering device according to the invention the feed metering device is provided with a means for determining the decrease per unit of time of the quantity of fodder and/or drink in the feeding trough. Such a means may be used for issuing a signal for operating the closing means, but may also be used (in combination with an animal identification) for determining whether the eating rate of a particular animal corresponds with its usual eating rate. Said eating rate may be an indication of the health of an animal.

It is particularly advantageous when the feed metering device is provided with a comparator for comparing the determined decrease per unit of time with a decrease threshold. When the determined decrease per unit of time is equal to or smaller than the decrease threshold, the comparator can issue a signal causing the closing means to close the entrance opening. For reasons of accuracy the feed metering device is preferably provided with a file for containing per animal a decrease threshold.

There is preferably provided an obstacle detector for detecting an obstacle in the entrance opening. Such an obstacle detector is preferably adapted to distinguish animals and other objects from each other. Moreover, the animal identification device is adapted to co-operate with the obstacle detector for obtaining an extremely efficient functioning of the closing means.

It has appeared that animals, after having taken the quantity of fodder and/or drink, knock or kick with force against the feed metering device for trying to obtain additional fodder and/or drink. According to the invention this undesirable behaviour is prevented by providing an anti-violence detector. When said anti-violence detector, which may comprise e.g. a vibration detector, detects that there is knocked or the like against the feed metering device, said detector issues a signal for operating the closing means for closing the feeding trough.

The closing means may be formed by a separate component, but is preferably constituted by the feeding trough itself which is designed as a movable one. As a result thereof the number of components is limited and the feed metering device can be manufactured cheaply.

The closing means may be formed by a separate component, but is preferably constituted by the feeding trough itself which is designed as a movable one. As a result thereof the number of components is limited and the feed metering device can be manufactured cheaply.

Preferably a detector is suitable for issuing, after detection of a particular situation, a signal for controlling the functioning of the closing means.

Preferably the feed metering device is further provided with an animal identification device for identifying a particular animal that visits the feeding trough. Such an animal identification device may be used extremely advantageously for supplying a quantity of fodder and/or drink by the feed supplying device to the feeding trough with the aid of data from the animal identification device. With the aid of data from the animal identification device the operation of the closing means is controlled in an advantageous manner, so that it is possible to forbid a particular animal access to the feeding trough. Just because the animal identification device is adapted to identify a particular animal, said device is especially suitable for holding back an animal wishing to make use of the feeding trough at an undesired point of time. Moreover, the animal identification device is adapted to co-operate with the obstacle detector for obtaining an extremely efficient functioning of the closing means.

A feed metering device according to the invention is particularly characterized in that the feed metering device is provided with a device for issuing a warning signal indicating that the closing means is going to close. In this manner an animal knows when the closing means is going to close, and thus it is possible to teach the animal to leave the feeding trough when the warning signal (e.g. a sound or light signal) is issued.

It has appeared that animals having made use of the feeding trough, even after there is no more fodder and/or drink present therein, still keep their heads in the feeding trough during a short to a longer period of time waiting for additional fodder and/or drink that may still be supplied. As a result thereof another animal that is ready to be fed cannot gain access to the feeding trough immediately. According to the invention this is prevented in that the feed metering device is provided with a detection device for determining the quantity of fodder and/or drink in the feeding trough at a point of time after a supply of a quantity of fodder and/or drink and for issuing, in dependence of the result of the quantity determination, a signal for operating the closing means. This makes it possible to operate the closing means, after an animal has consumed at least a part of the quantity of fodder and/or drink, so that further access to the feeding trough is impossible for that animal. An animal that has just made use of the feeding trough is thus urged to clear the entrance to the feeding trough.

The detection device preferably comprises a weighing device for weighing the quantity of fodder and/or drink in the feeding trough. Said weighing device is capable of measuring whether or not there is still fodder and/or drink present in the feeding trough after the supply of a quantity of fodder and/or drink into the feeding trough. Thus the weighing device, e.g. after having detected that there is no more fodder and/or drink present in the feeding trough, can issue a signal for operating the closing means for closing the feeding trough.

When the detection device comprises a clock, it is possible to measure how long the quantity of fodder and/or drink in the feeding trough remains untouched. By setting for example an upper limit, after said upper limit has elapsed, i.e. after a certain threshold time has elapsed, the clock can issue a signal for having the closing means closed. In particular when data from the weighing device and the clock are combined, an extremely efficient use of the feed metering device is possible.

In an embodiment of a feed metering device according to the invention the feed metering device is provided with a means for determining the decrease per unit of time of the quantity of fodder and/or drink in the feeding trough. Such a means may be used for issuing a signal for operating the closing means, but may also be used (in combination with an animal identification) for determining whether the eating rate of a particular animal corresponds with its usual eating rate. Said eating rate may be an indication of the health of an animal.

It is particularly advantageous when the feed metering device is provided with a comparator for comparing the determined decrease per unit of time with a decrease threshold. When the determined decrease per unit of time is equal to or smaller than the decrease threshold, the comparator can issue a signal causing the closing means to close the entrance opening. For reasons of accuracy the feed metering device is preferably provided with a file for containing per animal a decrease threshold.

An embodiment of a feed metering device according to the invention is provided with a device for detecting jamming for the closing means. This prevents an animal from being injured during closing of the entrance opening to the feeding trough.

It has appeared that animals, after having taken the quantity of fodder and/or drink, knock or kick with force against the feed metering device for trying to obtain additional fodder and/or drink. According to the invention this undesirable behaviour is prevented by providing an anti-violence detector. When said anti-violence detector, which may comprise e.g. a vibration detector, detects that there is knocked or the like against the feed metering device, said detector issues a signal for operating the closing means for closing the feeding trough.

The invention further relates to a method of supplying fodder and/or drink in metered portions to an animal, which method comprises the step of supplying a to be supplied quantity of fodder and/or drink into a feeding trough of a feed metering device, and the step of having an entrance opening to the feeding trough closed by a closing means, characterized in that the method comprises the step of determining the quantity of fodder and/or drink in the feeding trough at a point of time after the supply of the to be supplied quantity of fodder and/or drink, the step of having the entrance opening closed being performed in dependence of the determined quantity of fodder and/or drink. In this manner an extremely efficient use of the feed metering device is possible.

In an embodiment of a method according to the invention the method comprises the step of intermittently measuring the quantity of fodder and/or drink in the feeding trough. Although a single determination of the quantity of fodder and/or drink present at a certain point of time after the supply of the to be supplied quantity suffices for having the entrance opening closed, it will be more accurate to perform a plurality of quantity determinations, i.e. to perform the quantity determination intermittently. In this manner incorrect values, e.g. owing to the fact that the animal pushes on the feeding trough with its snout and thus disturbs the quantity determination, can be corrected. A particularly accurate closing and consequently an extremely efficient use of the feed metering device is obtained when the method comprises the step of continuously measuring the quantity of fodder and/or drink in the feeding trough.

It is particularly advantageous when the method comprises the step of determining the decrease per unit of time of the quantity of fodder and/or drink in the feeding trough. For that purpose successive quantity determinations are compared with each other. When the method comprises the step of comparing the decrease per unit of time with a decrease threshold, it is possible to take an accurate decision regarding closing of the entrance opening. It is particularly advantageous when the method comprises the step of having the entrance opening closed when the decrease per unit of time is equal to or smaller than the decrease threshold. A reliable closing can be realised when the method comprises the step of causing the entrance opening to be closed when the decrease per unit of time during a pre-adjustable period is equal to or smaller than the decrease threshold. Alternatively it is also possible to take the number of times when the decrease per unit of time is below the decrease threshold as a closing criterion.

Different animals having a different eating rate, the method preferably comprises the step of identifying the animal, the step of determining per animal an individual decrease threshold, and the step of comparing the decrease per unit of time with the individual decrease threshold.

The invention will be elucidated hereinafter by way of example with reference to the drawing, in which:
Figure 1 shows an embodiment of a feed metering device according to the invention, and
Figure 2 shows an alternative embodiment of a feed metering device according to the invention.

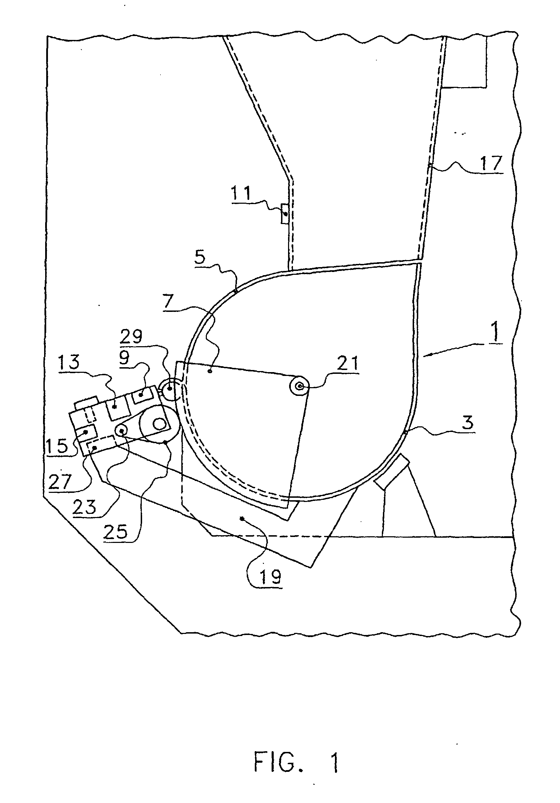

Figure 1 shows schematically an embodiment of a feed metering device 1 according to the invention. The feed metering device 1 supplies fodder and/or drink (hereinafter designated by feed, by which is meant fodder and/or drink) in metered portions to an animal, and is provided with a feeding trough 3 for containing feed. An entrance opening 5 makes the feeding trough 3 accessible to an animal, for example but not exclusively a cow. An animal identification device 15 known per se is preferably disposed in the feed metering device 1 and identifies a particular animal approaching the feeding trough 3 and wishing to make use of it. A feed supplying device 17 supplies a quantity of feed into the feeding trough 3, possibly with the aid of data from the animal identification device 15, the feed from a non-shown feed stock arriving in the feeding trough 3 via e.g. a (non-shown) flap and a chute.

Thus it is possible for the feed metering device 1 to identify a particular animal, e.g. a cow, for example by means of a transponder fitted to or on the cow. The feed supplying device 17 is controlled in a manner known per se by software ensuring that the right amount of feed is supplied to the relevant cow.

The feed metering device 1 is provided with a closing means 7 that is movable across an entrance opening 5 of the feeding trough 3. When the closing means 7 is moved across the entrance opening 5, the feeding trough 3 is made inaccessible to a particular animal, after which, as it has appeared in practice, the animal clears of its own will the entrance to the feeding trough 3 for a next animal. In the embodiment shown the closing means 7 is constituted by a vessel-like element which is capable of rotating about an axis 21. Said axis 21 may be constituted by an axis which is driven by a motor, which motor, as will be described hereinafter, is controlled with the aid of data in relation to the quantity of feed present in the feeding trough.

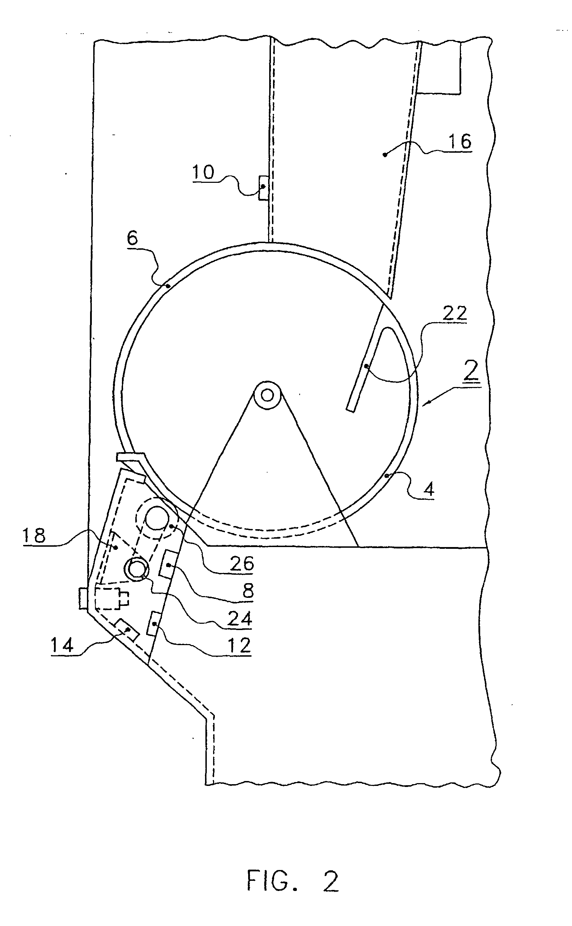

Figure 2 shows schematically an alternative embodiment of a feed metering device 2 according to the invention. In this embodiment the closing means is constituted by the feeding trough 4 itself which is designed as a movable one. In the shown situation the feeding trough 4 is rotatably disposed about an axis 20, which axis 20 may be constituted by an axis which is driven by a motor, said motor being controlled with the aid of data in relation to the quantity of feed present in the feeding trough, as will be elucidated hereinafter. In order to prevent feed from falling from the feeding trough 4 in the position in which the feeding trough 4 closes the entrance opening 6, the feeding trough 4 is provided with a wall portion 22 for catching remaining feed. Said wall portion 22 can also act as a feed guide means for feed supplied by the feed supplying device 16 into the feeding trough 4.

In the embodiments described the closing means rotates about an axis, the closing means being driven by a motor controlled with the aid of data in relation to the quantity of feed present in the feeding trough. For the purpose of providing besides a simple but reliable construction also a compact construction, a roll 25 respectively 26 is preferably driven by a motor 23 respectively 24, which roll 25, 26 contacts the closing means 7 respectively 4. According to the invention the feed metering device 1; 2 is provided with a detection device 19; 18 for detecting after a supply of a quantity of feed that at least a part of the quantity of feed has been removed from the feeding trough 3; 4, and for issuing thereupon a signal for operating the closing means 7; 4. Thus it is possible to prevent that, after an animal has taken at least a part of the quantity of feed, this animal remains staying at the feeding trough 3; 4, by operating the closing means 7; 4 after receipt of a signal from the detection device 19; 18. An animal which has just made use of the feeding trough is then urged to clear the entrance to the feeding trough. Such a detection device may for example be constituted by a camera which, by means of image recognition software, can give an estimation of the quantity of feed present in the feeding trough.

However, the detection device is preferably constituted by a weighing device for weighing the feed present in the feeding trough. Such weighing devices are known per se. With the aid of these means it is possible to determine how much feed has been consumed by a particular animal, and also whether there is remaining feed present in the feeding trough. The closing means 7; 4 is then preferably controlled with the aid of data both from the animal identification device and from the weighing device, so that the eating behaviour of a particular animal can be taken into account. The weighing device is capable of measuring whether or not there is still feed present in the feeding trough after the supply of a quantity of feed into the feeding trough, and how much remaining feed is left. Thus the weighing device, e.g. after having detected that there is no more feed present in the feeding trough, can issue a signal for operating the closing means for closing the feeding trough.

As shown in Figure 1, the weighing device is constituted by a device 19 for determining the degree of pivotability of the feeding trough 3, and for deducing therefrom the weight of the feed present in the feeding trough 3. In this situation, in the example shown, the feeding trough 3 bears on the load sensor 27 via a supporting arm 19, the feeding trough 3 pivoting about a hinge pin 29.

In the embodiment of Figure 2 the weighing device for weighing the feed present in the feeding trough comprises the movable feeding trough 4. The feeding trough 4 is moved in a reciprocating manner by the motor 24 by which the roll 26 is driven. This movement generates a torque whose magnitude is determined by a device 18 for measuring the magnitude of the torque. From the torque determined the device 18 deduces the weight of the feed present in the feeding trough. The exact correlation between torque and quantity of feed can previously be determined by means of simple calibration tests.

The detection device 19; 18 preferably comprises a clock, so that it is possible to measure how long the quantity of (remaining) feed in the feeding trough 3; 4 remains untouched. By setting for example an upper limit, after said upper limit has elapsed, i.e. after a certain threshold time has elapsed, the clock can issue a signal for having the closing means 7; 4 closed. In particular when data from the weighing device and the clock are combined, an extremely efficient use of the feed metering device is possible. This makes it possible for example to use per animal a combination of data in relation to a lower threshold for remaining feed and an upper threshold for the time for operating the closing means 7; 4. Thus, when during a longer time than the threshold time less than the lower threshold of feed is present in the feeding trough 3; 4, the closing means is operated. As a non-limiting example can be taken: approximately 2% to 10% of the quantity of feed supplied by the feed supplying device to the feeding trough as a threshold for the quantity of remaining feed, and approximately 10 to 60 seconds as a threshold time.

The invention also relates to a method of supplying feed in metered portions to an animal, which method comprises the step of supplying a to be supplied quantity of feed into a feeding trough of a feed metering device, and the step of having an entrance opening to the feeding trough closed by a closing means, characterized in that the method comprises the step of determining the quantity of feed in the feeding trough at a point of time after the supply of the to be supplied quantity of feed, the step of having the entrance opening closed being performed in dependence of the determined quantity of feed. In this manner an extremely efficient use of the feed metering device is possible.

In an embodiment of a method according to the invention the method comprises the step of intermittently measuring the quantity of feed in the feeding trough. Although a single determination of the quantity of feed present at a certain point of time after the supply of the to be supplied quantity suffices for having the entrance opening closed, it will be more accurate to perform a plurality of quantity determinations, i.e. to perform the quantity determination intermittently. In this manner incorrect values, e.g. owing to the fact that the animal pushes on the feeding trough with its snout and thus disturbs the quantity determination, can be corrected. A particularly accurate closing and consequently an extremely efficient use of the feed metering device is obtained when the method comprises the step of continuously measuring the quantity of feed in the feeding trough.

It is particularly advantageous when the method comprises the step of determining the decrease per unit of time of the quantity of feed in the feeding trough. For that purpose successive quantity determinations are compared with each other. When the method comprises the step of comparing the decrease per unit of time with a decrease threshold, it is possible to take an accurate decision regarding closing of the entrance opening. It is particularly advantageous when the method comprises the step of having the entrance opening closed when the decrease per unit of time is equal to or smaller than the decrease threshold. A reliable closing can be realised when the method comprises the step of having the entrance opening closed when the decrease per unit of time during a pre-adjustable period is equal to or smaller than the decrease threshold. Alternatively it is also possible to take the number of times the decrease per unit of time comes below the decrease threshold as a closing criterion.

Different animals having a different eating rate, the method preferably comprises the step of identifying the animal, the step of determining per animal an individual decrease threshold, and the step of comparing the decrease per unit of time with the individual decrease threshold.

The embodiments of a feed metering device shown in Figures 1 and 2 are provided with a device 9; 8 for detecting jamming for the closing means 7; 4. This prevents an animal from being injured during closing of the entrance opening to the feeding trough. A device for detecting jamming is known per se, for example with automatically closing car windows. When the device for detecting jamming detects a jamming, said device ensures by controlling the closing means that the latter clears the entrance opening. Preferably the closing means is re-closed automatically after a short time, e.g. less than 2 seconds. When an animal does not clear the feeding trough after the first closing of the closing means, the closing means will repeat the closing action several times until it has completely closed the entrance opening. When the closing means continues to open and close, there may have occurred a defect. Consequently it is advisable to perform closing of the closing means a maximum number of times, an alarm signal being issued after said maximum number has been reached. Said alarm signal may be audible, visible or otherwise.

An obstacle detector 11; 10 is provided for detecting an obstacle in the entrance opening. Such an obstacle detector 11; 10 is preferably suitable for distinguishing animals and other objects from each other. For that purpose a combination with the animal identification device is advantageous, although image recognition equipment is possible as well. An obstacle could for example be constituted by the hand of a person cleaning the feeding trough, it then being obvious that the closing means must not be closed when the hand is located in the entrance opening.

The embodiments of the invention according to Figures 1 and 2 also comprise an anti-violence detector 13; 12 for detecting undesired kicking, knocking or the like against the feed metering device 1; 2. When the anti-violence detector 13; 12, which may comprise e.g. a vibration detector, detects that there is knocked or the like against the feed metering device 1; 2, then said detector issues a signal for operating the closing means 7; 4 for closing the feeding trough 3; 4.

There is preferably provided a device for issuing a warning signal indicating closing of the closing means, so that the animals are warned of closing.

## Claims

1. A feed metering device (1; 2) for supplying fodder and/or drink in metered portions to an animal, said feed metering device (1; 2) being provided with a feeding trough (3; 4) for containing feed, an entrance opening (5; 6) to the feeding trough (3; 4), a closing means (7; 4) for closing the entrance opening (5; 6), and a feed supplying device (17; 16) for intermittently supplying a quantity of fodder and/or drink into the feeding trough, **characterized in that** the feed metering device (1; 2) is provided with a detection device (19; 18) for determining the quantity of fodder and/or drink in the feeding trough (3; 4) at a point of time after a supply of a quantity of fodder and/or drink and for issuing, in dependence of the result of the quantity determination, a signal for operating the closing means (7; 4).

2. A feed metering device (1; 2) as claimed in claim 1, **characterized in that** the detection device (19; 18) comprises a weighing device for weighing the quantity of fodder and/or drink in the feeding trough (7; 4).

3. A feed metering device (1; 2) as claimed in claim 1 or 2, **characterized in that** the detection device (19; 18) comprises a clock.

4. A feed metering device (1; 2) as claimed in claims 1, 2 or 3, **characterized in that** the feed metering device (1; 2) is provided with a clock for determining the duration from a supply of a quantity of fodder and/or drink and for issuing, in dependence of the result of the determination of the duration, a second signal for operating the closing means (7; 4), the feed metering device (1; 2) being provided with a closing means operating device for operating the closing means (7; 4) on the basis of the first and/or the second signal.

5. A feed metering device (1; 2) as claimed in any one of the preceding claims, **characterized in that** the feed metering device (1; 2) is provided with a means for determining the decrease per unit of time of the quantity of fodder and/or drink in the feeding trough.

6. A feed metering device (1; 2) as claimed in claim 5, **characterized in that** the feed metering device (1; 2) is provided with a comparator for comparing the determined decrease per unit of time with a decrease threshold.

7. A feed metering device (1; 2) as claimed in claim 6, **characterized in that** the feed metering device (1; 2) is provided with a file for containing per animal a decrease threshold.

8. A feed metering device (1; 2) as claimed in any one of the preceding claims, **characterized in that** the feed metering device (1; 2) is provided with a device (9; 8) for detecting jamming for the closing means (7; 4).

9. A feed metering device (1; 2) as claimed in any one of the preceding claims, **characterized in that** the feed metering device (1; 2) is provided with an obstacle detector (11; 10) for detecting an obstacle in the entrance opening (5; 6).

10. A feed metering device (1; 2) as claimed in any one of the preceding claims, **characterized in that** the feed metering device (1; 2) is provided with an anti-violence detector (13; 12).

11. A feed metering device (1; 2) as claimed in any one of the preceding claims, **characterized in that** a detector (9, 11, 13; 8, 10, 12) is suitable for issuing, after detection of a particular situation, a signal for controlling the functioning of the closing means (7; 4).

12. A feed metering device (1; 2) as claimed in any one of the preceding claims, **characterized in that** the feed metering device (1; 2) is provided with an animal identification device (15; 14) for identifying an animal, the closing means (7; 4) being operated with the aid of data from the animal identification device (15; 14).

13. A feed metering device (1; 2) as claimed in any one of the preceding claims, **characterized in that** the feed metering device (1; 2) is provided with a device for issuing a warning signal indicating that the closing means (7; 4) is going to close.

14. A method of supplying fodder and/or drink in metered portions to an animal, which method comprises the step of supplying a to be supplied quantity of fodder and/or drink into a feeding trough of a feed metering device, and the step of having an entrance opening to the feeding trough closed by a closing means, **characterized in that** the method comprises the step of determining the quantity of fodder and/or drink in the feeding trough at a point of time after the supply of the to be supplied quantity of fodder and/or drink, the step of having the entrance opening closed being performed in dependence of the determined quantity of fodder and/or drink.

15. A method as claimed in claim 14, **characterized in that** the method comprises the step of intermittently measuring the quantity of fodder and/or drink in the feeding trough.

16. A method as claimed in claim 15, **characterized in that** the method comprises the step of continuously measuring the quantity of fodder and/or drink in the feeding trough.

17. A method as claimed in any one of claims 14 through 16, **characterized in that** the method comprises the step of determining the decrease per unit of time of the quantity of fodder and/or drink in the feeding trough.

18. A method as claimed in claim 17, **characterized in that** the method comprises the step of comparing the decrease per unit of time with a decrease threshold.

19. A method as claimed in claim 18, **characterized in that** the method comprises the step of having the entrance opening closed when the decrease per unit of time is equal to or smaller than the decrease threshold.

20. A method as claimed in claim 19, **characterized in that** the method comprises the step of having the entrance opening closed when the decrease per unit of time during a pre-adjustable period is equal to or smaller than the decrease threshold.

21. A method as claimed in any one of claims 18 through 20, **characterized in that** the method comprises the step of identifying the animal, the step of determining per animal an individual decrease threshold, and the step of comparing the decrease per unit of time with the individual decrease threshold.

## Patentansprüche

1. Futterdosiervorrichtung (1; 2) zum Zuführen von Futter und/oder Trinkflüssigkeit in dosierten Portionen zu einem Tier, wobei die Futterdosiervorrichtung (1; 2) mit einem Futtertrog (3; 4) zur Aufnahme von Futter, einer Eintrittsöffnung (5; 6) zu dem Futtertrog (3; 4), einer Schließvorrichtung (7; 4) zum Schließen der Eintrittsöffnung (5; 6) und einer Futterzuführvorrichtung (17; 16) versehen ist, die periodisch eine Menge an Futter und/oder Trinkflüssigkeit in den Futtertrog einleitet,
**dadurch gekennzeichnet, daß** die Futterdosiervorrichtung (1; 2) mit einer Ermittlungsvorrichtung (19; 18) versehen ist, um die Menge an Futter und/oder Trinkflüssigkeit in dem Futtertrog (3; 4) zu einem Zeitpunkt nach einer Einleitung einer Menge an Futter und/oder Trinkflüssigkeit zu ermitteln und in Abhängigkeit von dem Ergebnis der Mengenermittlung ein Signal zur Betätigung der Schließvorrichtung (7; 4) zu geben.

2. Futterdosiervorrichtung (1; 2) nach Anspruch 1,
**dadurch gekennzeichnet, daß** die Ermittlungsvorrichtung (19; 18) eine Wiegevorrichtung zum Wiegen der in dem Futtertrog (7; 4) befindlichen Menge an Futter und/oder Trinkflüssigkeit umfaßt.

3. Futterdosiervorrichtung (1; 2) nach Anspruch 1 oder 2,
**dadurch gekennzeichnet, daß** die Ermittlungsvorrichtung (19; 18) eine Uhr umfaßt.

4. Futterdosiervorrichtung (1; 2) nach den Ansprüchen 1, 2 oder 3,
**dadurch gekennzeichnet, daß** die Futterdosiervorrichtung (1; 2) mit einer Uhr versehen ist, um die Zeit seit einer Einleitung einer Menge an Futter und/oder Trinkflüssigkeit zu ermitteln und in Abhängigkeit von dem Ergebnis der Zeitermittlung ein zweites Signal zum Betätigen der Schließvorrichtung (7; 4) zu geben, wobei die Futterdosiervorrichtung (1; 2) mit einer Schließvorrichtungs-Betätigungsvorrichtung versehen ist, um die Schließvorrichtung (7; 4) auf der Basis des ersten und/oder des zweiten Signals zu betätigen.

5. Futterdosiervorrichtung (1; 2) nach einem der vorhergehenden Ansprüche,
**dadurch gekennzeichnet, daß** die Futterdosiervorrichtung (1; 2) mit einer Vorrichtung versehen ist, um die Abnahme pro Zeiteinheit der Menge an Futter und/oder Trinkflüssigkeit in dem Futtertrog zu ermitteln.

6. Futterdosiervorrichtung (1; 2) nach Anspruch 5,
**dadurch gekennzeichnet, daß** die Futterdosiervorrichtung (1; 2) mit einem Komparator versehen ist, um die ermittelte Abnahme pro Zeiteinheit mit einem Abnahme-Grenzwert zu vergleichen.

7. Futterdosiervorrichtung (1; 2) nach Anspruch 6,
**dadurch gekennzeichnet, daß** die Futterdosiervorrichtung (1; 2) mit einer Datei versehen ist, die für jedes Tier einen Abnahme-Grenzwert enthält.

8. Futterdosiervorrichtung (1; 2) nach einem der vorhergehenden Ansprüche,
**dadurch gekennzeichnet, daß** die Futterdosiervorrichtung(1; 2) mit einer Vorrichtung(9; 8) zum Ermitteln eines Klemmens der Schließvorrichtung (7; 4) versehen ist.

9. Futterdosiervorrichtung (1; 2) nach einem der vorhergehenden Ansprüche,
**dadurch gekennzeichnet, daß** die Futterdosiervorrichtung (1; 2) mit einem Hindernisdetektor (11; 10) versehen ist, um ein Hindernis in der Eintrittsöffnung (5; 6) zu detektieren.

10. Futterdosiervorrichtung (1; 2) nach einem der vorhergehenden Ansprüche,
**dadurch gekennzeichnet, daß** die Futterdosiervorrichtung (1; 2) mit einem Antigewaltdetektor (13; 12) versehen ist.

11. Futterdosiervorrichtung (1; 2) nach einem der vorhergehenden Ansprüche,
**dadurch gekennzeichnet, daß** ein Detektor (9, 11, 13; 8, 10, 12) dazu ausgebildet ist, nach dem Detektieren einer bestimmten Situation ein Signal zum Steuern der Funktion der Schließvorrichtung (7; 4) zu geben.

12. Futterdosiervorrichtung (1; 2) nach einem der vorhergehenden Ansprüche,
**dadurch gekennzeichnet, daß** die Futterdosiervorrichtung (1; 2) mit einer Tieridentifikationsvorrichtung (15; 14) zum Identifizieren eines Tieres versehen ist, wobei die Schließvorrichtung (7; 4) mit Hilfe von Daten von der Tieridentifikationsvorrichtung (15; 14) betätigt wird.

13. Futterdosiervorrichtung (1; 2) nach einem der vorhergehenden Ansprüche,
**dadurch gekennzeichnet, daß** die Futterdosiervorrichtung (1; 2) mit einer Vorrichtung zur Abgabe eines Warnsignals versehen ist, das anzeigt, daß die sich Schließvorrichtung (7; 4) schließen wird.

14. Verfahren zum Zuführen von Futter und/oder Trinkflüssigkeit in dosierten Portionen zu einem Tier, wobei das Verfahren den Verfahrensschritt des Einleitens einer zuzuführenden Menge an Futter und/oder Trinkflüssigkeit in einen Futtertrog einer Futterdosiervorrichtung sowie den Verfahrensschritt des Schließens einer Eintrittsöffnung zu dem Futtertrog durch eine Schließvorrichtung umfaßt,
**dadurch gekennzeichnet, daß** das Verfahren den Verfahrensschritt des Ermittelns der Menge an Futter und/oder Trinkflüssigkeit in dem Futtertrog zu einem Zeitpunkt nach der Einleitung der zuzuführenden Menge an Futter und/oder Trinkflüssigkeit umfaßt, wobei der Verfahrensschritt des Schließens der Eintrittsöffnung in Abhängigkeit von der ermittelten Menge an Futter und/oder Trinkflüssigkeit durchgeführt wird.

15. Verfahren nach Anspruch 14,
**dadurch gekennzeichnet, daß** das Verfahren den Verfahrensschritt des periodischen Messens der Menge an Futter und/oder Trinkflüssigkeit in dem Futtertrog umfaßt.

16. Verfahren nach Anspruch 15,
**dadurch gekennzeichnet, daß** das Verfahren den Verfahrensschritt des kontinuierlichen Messens der Menge an Futter und/oder Trinkflüssigkeit in dem Futtertrog umfaßt.

17. Verfahren nach einem der Ansprüche 14 bis 16,
**dadurch gekennzeichnet, daß** das Verfahren den Verfahrensschritt des Ermittelns der Abnahme pro Zeiteinheit der Menge an Futter und/oder Trinkflüssigkeit in dem Futtertrog umfaßt.

18. Verfahren nach Anspruch 17,
**dadurch gekennzeichnet, daß** das Verfahren den Verfahrensschritt des Vergleichens der Abnahme pro Zeiteinheit mit einem Abnahme-Grenzwert umfaßt.

19. Verfahren nach Anspruch 18,
**dadurch gekennzeichnet, daß** das Verfahren den Verfahrensschritt des Schließens der Eintrittsöffnung umfaßt, wenn die Abnahme pro Zeiteinheit gleich oder kleiner als der Abnahme-Grenzwert ist.

20. Verfahren nach Anspruch 19,
**dadurch gekennzeichnet, daß** das Verfahren den Verfahrensschritt des Schließens der Eintrittsöffnung umfaßt, wenn die Abnahme pro Zeiteinheit während eines voreinstellbaren Zeitraumes gleich oder kleiner als der Abnahme-Grenzwert ist.

21. Verfahren nach einem der Ansprüche 18 bis 20,
**dadurch gekennzeichnet, daß** das Verfahren den Verfahrensschritt des Identifizierens des Tieres, den Verfahrensschritt des Ermitteln eines individuellen Abnahme-Grenzwertes für jedes Tier und den Verfahrensschritt des Vergleichens der Abnahme pro Zeiteinheit mit dem individuellen Abnahme-Grenzwert umfaßt.

## Revendications

1. Dispositif de dosage d'alimentation (1 ; 2) pour fournir du fourrage et/ou de la boisson sous forme de portions dosées à un animal, ledit dispositif de dosage (1 ; 2) étant muni d'une auge (3 ; 4) pour contenir l'alimentation, d'un orifice d'accès (5 ; 6) pour l'auge (3 ; 4), de moyens de fermeture (7 ; 4) pour fermer l'orifice d'accès (5 ; 6), et d'un dispositif pour fournir l'alimentation (17 ; 16) pour distribuer par intermittence une quantité de fourrage et/ou de boisson dans l'auge, **caractérisé en ce que** le dispositif de dosage d'alimentation (1 ; 2) est muni d'un dispositif de détection (19 ; 18) afin de déterminer la quantité de fourrage et/ou de boisson dans l'auge (3 ; 4) dans une période suivant la distribution d'une quantité de fourrage et/ou de boisson et d'émettre, selon le résultat de la détermination de la quantité, un signal pour faire fonctionner les moyens de fermeture (7 ; 4).

2. Dispositif de dosage d'alimentation (1 ; 2) selon la revendication 1, **caractérisé en ce que** le dispositif de détection (19 ; 18) comprend un dispositif de pesage afin de peser la quantité de fourrage et/ou de boisson dans l'auge (3 ; 4).

3. Dispositif de dosage d'alimentation (1 ; 2) selon la revendication 1 ou 2, **caractérisé en ce que** le dispositif de détection (19 ; 18) comprend une horloge.

4. Dispositif de dosage d'alimentation (1 ; 2) selon la revendication 1, 2 ou 3, **caractérisé en ce que** le dispositif de dosage d'alimentation (1 ; 2) est muni d'une horloge afin de déterminer la durée de la distribution d'une quantité de fourrage et/ou de boisson et d'émettre, selon le résultat de la détermination de la durée, un second signal pour faire fonctionner les moyens de fermeture (7 ; 4), le dispositif de dosage d'alimentation (1 ; 2) étant muni d'un dispositif faisant fonctionner les moyens de fermeture (7 ; 4) sur la base du premier et/ou du second signal.

5. Dispositif de dosage d'alimentation (1 ; 2) selon l'une quelconque des revendications précédentes, **caractérisé en ce que** le dispositif de dosage d'alimentation (1 ; 2) est muni d'un moyen pour déterminer la diminution par unité de temps de la quantité de fourrage et/ou de boisson dans l'auge.

6. Dispositif de dosage d'alimentation (1 ; 2) selon la revendication 5, **caractérisé en ce que** le dispositif de dosage d'alimentation (1 ; 2) est muni d'un comparateur afin de comparer la diminution déterminée par unité de temps avec un seuil de diminution.

7. Dispositif de dosage d'alimentation (1 ; 2) selon la revendication 6, **caractérisé en ce que** le dispositif de dosage d'alimentation (1 ; 2) est muni d'un fichier pour contenir un seuil de diminution par animal.

8. Dispositif de dosage d'alimentation (1 ; 2) selon l'une quelconque des revendications précédentes, **caractérisé en ce que** le dispositif de dosage d'alimentation (1 ; 2) est muni d'un dispositif (9 ; 8) afin de détecter une anomalie des moyens de fermeture (7 ; 4).

9. Dispositif de dosage d'alimentation (1 ; 2) selon l'une quelconque des revendications précédentes, **caractérisé en ce que** le dispositif de dosage d'alimentation (1 ; 2) est muni d'un détecteur d'obstacles (11 ; 10) afin de détecter un obstacle dans l'orifice d'accès (5 ; 6).

10. Dispositif de dosage d'alimentation (1 ; 2) selon l'une quelconque des revendications précédentes, **caractérisé en ce que** le dispositif de dosage d'alimentation (1 ; 2) est muni d'un détecteur de chocs (13 ; 12).

11. Dispositif de dosage d'alimentation (1 ; 2) selon l'une quelconque des revendications précédentes, **caractérisé en ce qu'**un détecteur (9, 11, 13 ; 8, 10, 12) est adapté pour émettre, après la détection d'une situation particulière, un signal pour contrôler le fonctionnement des moyens de fermeture (7 ; 4).

12. Dispositif de dosage d'alimentation (1 ; 2) selon l'une quelconque des revendications précédentes, **caractérisé en ce que** le dispositif de dosage d'alimentation (1 ; 2) est muni d'un dispositif d'identification d'un animal (15 ; 14) afin d'identifier un animal, les moyens de fermeture (7 ; 4) fonctionnant à l'aide des données provenant du dispositif d'identification de l'animal (15 ; 14).

13. Dispositif de dosage d'alimentation (1 ; 2) selon l'une quelconque des revendications précédentes, **caractérisé en ce que** le dispositif de dosage d'alimentation (1 ; 2) est muni d'un dispositif pour émettre un signal d'alarme indiquant que les moyens de fermeture (7 ; 4) sont en cours de fermeture.

14. Procédé pour fournir du fourrage et/ou de la boisson sous forme de portions dosées à un animal, lequel procédé comprend l'étape consistant à fournir une quantité de fourrage et/ou de boisson devant être distribuée dans une auge d'un dispositif de dosage d'alimentation, et l'étape de fermeture d'un orifice d'accès dans l'auge par des moyens de fermeture, **caractérisé en ce que** le procédé comprend l'étape consistant à déterminer la quantité de fourrage et/ou de boisson dans l'auge dans une période suivant la distribution de la quantité de fourrage et/ou de boisson devant être distribuée, l'étape de fermeture de l'orifice d'accès étant réalisée selon la quantité déterminée de fourrage et/ou de boisson.

15. Procédé selon la revendication 14, **caractérisé en ce que** le procédé comprend l'étape consistant à mesurer par intermittence la quantité de fourrage et/ou de boisson dans l'auge.

16. Procédé selon la revendication 15, **caractérisé en ce que** le procédé comprend l'étape consistant à mesurer en permanence la quantité de fourrage et/ou de boisson dans l'auge.

17. Procédé selon l'une quelconque des revendications 14 à 16, **caractérisé en ce que** le procédé comprend l'étape consistant à déterminer la diminution par unité de temps de la quantité de fourrage et/ou de boisson dans l'auge.

18. Procédé selon la revendication 17, **caractérisé en ce que** le procédé comprend l'étape consistant à comparer la diminution par unité de temps avec un seuil de diminution.

19. Procédé selon la revendication 18, **caractérisé en ce que** le procédé comprend l'étape consistant à fermer l'orifice d'accès lorsque la diminution par unité de temps est égale ou inférieure au seuil de diminution.

20. Procédé selon la revendication 19, **caractérisé en ce que** le procédé comprend l'étape consistant à fermer l'orifice d'accès lorsque la diminution par unité de temps au cours d'une période pré-définissable est égale ou inférieure au seuil de diminution.

21. Procédé selon l'une quelconque des revendications 18 à 20, **caractérisé en ce que** le procédé comprend l'étape consistant à identifier l'animal, l'étape consistant à déterminer un seuil individuel de diminution par animal, et l'étape consistant à comparer la diminution par unité de temps avec le seuil individuel de diminution.
